# FASCICULE DE BREVET EUROPEEN

(11) **EP 0 489 642 B1**
(45) Date de publication et mention de la délivrance du brevet: **10.01.1996**
(21) Numéro de dépôt: 91403266.9
(22) Date de dépôt: 03.12.1991
(51) Int. Cl.: H04Q 1/14

(54) **Réglette de raccordement précâblable**
Vorverdrahtbare Anschlussleiste
Prewireable terminal block

(30) Priorité: 05.12.1990 FR 9015214
(43) Date de publication de la demande: 10.06.1992
(73) Titulaire: ALCATEL CABLE INTERFACE, F-08330 Vrigne aux Bois (FR); ALCATEL N.V., NL-1077 XX Amsterdam (NL)
(72) Inventeur: Audeval, Fabrice, F-08090 Aiglemont (FR); Chezy, Eric, Balan F-08200 Sedan (FR)
(74) Mandataire: Weinmiller, Jürgen

(56) Documents cités:
- DE-A- 3 906 894
- GB-A- 2 140 221

## Description

La présente invention porte sur les dispositifs modulaires de raccordement, appelés réglettes de raccordement et utilisés pour la constitution de répartiteurs téléphoniques ou informatiques.

Les réglettes concernées sont de type mural, c'est-à-dire équipées pour être montées sur rail ou un profilé porteur. Elles sont à connexions autodénudantes et assurent le brassage de conducteurs multiples, notamment entre un autocommutateur et un ou plusieurs câbles de distribution, au moyen de jarretières ou de cordons.

Ces réglettes sont organisées en deux ensembles, l'un pour l'autocommutateur auquel il est relié par un ou des câbles à connecteurs terminaux et le deuxième pour le ou les câbles de distribution. Les jarretières relient les deux ensembles.

Les conducteurs du ou des câbles de distribution sont raccordés au deuxième ensemble éventuellement organisé en plusieurs sous-ensembles par câble de distribution.

Le document FR-A-2550042 notamment décrit une telle réglette de raccordement. Elle est à corps ou bloc isolant présentant des moyens de fixation sur sa face arrière, pour le montage et le maintien de la réglette, à un niveau quelconque sur son rail porteur. Elle est à double rangée de connexions autodénudantes avant, pour les conducteurs de câbles d'une part et pour les jarretières ou les cordons d'autre part. Les connexions autodénudantes de même rang sur ces deux rangées sont raccordées l'une à l'autre à l'intérieur du corps par des contacts élastiques en pression l'un contre l'autre.

Dans cette réglette, les conducteurs ou cordons sont reçus par l'un de ses côtés et les jarretières par l'autre. Ils sont guidées les uns et les autres le long de leur rangée de connexions autodénudantes dans des canaux formés à leur effet sur les faces intérieures des deux parois supérieure et inférieure du corps. Ces canaux débouchent au niveau des connexions autodénudantes.

Pour des raisons pratiques, le nombre de connexions par rangée est limité et relativement faible, afin de rendre possible le guidage des conducteurs et des jarretières sur la longueur de la réglette dans leurs canaux. Ces réglettes sont ainsi souvent limitées à 8 paires de conducteurs et sont regroupées pour former l'ensemble correspondant au nombre de paires à brasser.

Les connexions autodénudantes sont des fourches doubles transversales à la réglette. Un seul conducteur ou un seul fil de jarretière est normalement raccordé dans l'une des fentes de chaque fourche double.

Les raccordements des conducteurs et des jarretières sur les connexions autodénudantes sont réalisés sur site. Lors d'une modification de certains des raccordements effectués, en particulier lors d'un changement d'autocommutateur, on utilise en théorie la deuxième fente laissée libre des connexions autodénudantes, pour y raccorder un nouveau conducteur ou nouveau fil de jarretière en effectuant une dérivation sur les connexions autodénudantes. Ces nouveaux conducteurs ou fils sont préalablement à insérer dans les canaux déjà occupés par les anciens conducteurs ou fils. Aussi, il est souvent plus commode de défaire préalablement tous les raccordements sur la ou les réglettes concernées plutôt que de réaliser ces dérivations, du fait de l'accès peu aisé par les canaux aux connexions autodénudantes individuelles de chaque rangée.

La présente invention a pour but d'éviter les inconvénients de telles réglettes connues, en particulier :
- en augmentant le nombre de conducteurs et jarretières qu'elles peuvent recevoir individuellement tout en facilitant les raccordements et interventions,
- en permettant un précâblage d'un cordon de câble entre l'autocommutateur et le répartiteur, pour un gain de temps sur chantier,
- et en réduisant les temps d'immobilisation de l'installation globale, lors d'un changement de l'autocommutateur et/ou de l'ensemble des réglettes, côté autocommutateur, ou de tout le répartiteur.

Elle a donc pour objet une réglette de raccordement précablable, assurant le brassage de raccordement entre des conducteurs de câble et des fils de jarretières, comportant un corps isolant équipé de moyens de fixation sur l'une de ses faces dite arrière, pour le montage de ladite réglette sur un rail porteur, et portant des premières connexions affectées aux fils de jarretière et des deuxièmes connexions affectées aux conducteurs de câble, caractérisée en ce que ledit corps est constitué en au moins deux parties séparables l'une de l'autre, dites socle pour l'une d'elles arrière et bloc de raccordement pour l'autre avant, et assemblées avec la face arrière dudit bloc et la face avant du socle définissant un interface dit d'assemblage entre eux, et présente lesdites premières connexions disposées seules en au moins une rangée sur la face avant du bloc et lesdits deuxièmes connexions disposées, en correspondance en au moins une rangée, dans ledit interface d'assemblage et accessibles quand le bloc est séparé dudit socle, et en ce qu'elle comporte, en outre, des moyens internes de raccordement desdites premières connexions individuelles auxdites deuxièmes et des moyens d'assemblage et de verrouillage dudit bloc sur ledit socle.

Selon une autre caractéristique, lesdites premières connexions appartiennent individuellement à des premiers contacts montés dans ledit bloc et lesdites deuxièmes connexions individuellement à des deuxièmes contacts montés dans ledit socle et lesdits moyens internes de raccordement sont constitués par une première queue de connexion sur chaque premier contact et une autre queue de connexion sur chaque deuxième contact, dont les parties terminales viennent en contact élastique l'une contre l'autre dans ledit interface d'assemblage, quand le bloc est verrouillé sur le socle.

Ces premières connexions sont de préférence à fourche simple autodénudante disposée dans le sens longitudinal de la réglette et formée dans une lame double définissant, à l'opposé, ladite première queue de connexion et une deuxième queue de connexion séparées l'une de l'autre.

Les deuxièmes contacts sont de préférence en U dont les branches définissent la deuxième connexion autodénudante et la queue de connexion de chacun d'eux.

Selon une autre caractéristique, la réglette comporte en outre un premier contact de masse à l'une des extrémités de chaque rangée de premières connexions, du côté de l'entrée des jarretières dans le bloc, et un deuxième contact de masse à l'une des extrémités de chaque rangée de deuxièmes connexions, du côté de l'entrée du câble dans le socle, lesdits contacts de masse étant reliés par au moins une barrette de masse audit rail porteur.

Selon une autre caractéristique ladite réglette comporte des moyens de guidage et d'insertion du bloc sur le socle et des moyens de translation longitudinale du bloc inséré sur le socle, selon un débattement possible limité, pour lequel lesdits moyens de raccordement internes sont en contact à pression ou décalés les uns des autres, définissant une position de verrouillage et une position de déverrouillage du bloc sur le socle.

Selon une autre caractéristique, ledit bloc est lui-même en deux parties assemblées et séparables l'une de l'autre, dites bloc avant et bloc arrière, lesdites premières connexions sont des connexions autodénudantes du type à fourche et appartiennent à des premiers contacts individuels montés dans ledit bloc avant et présentant une queue de connexion opposée, et lesdites deuxièmes connexions sont des connexions autodénudantes en forme de U, appartiennent à des deuxièmes contacts individuels montés dans le bloc arrière et présentant une autre queue de connexion opposée et sont saillantes sur la face arrière du bloc arrière, avec l'ouverture du U en regard du socle, lesdites queues de connexion des premiers et deuxièmes contacts individuels constituant lesdits moyens internes de raccordement.

Selon une autre caractéristique, ladite réglette comporte en outre deux demi-couvercles de protection, montés articulés aux extrémités des petits côtés saillants de la face avant du bloc qu'ils recouvrent, lesdits demi-couvercles assurant en outre l'identification des premières connexions et de la réglette elle-même.

Les caractéristiques et avantages de la présente invention apparaîtront clairement au cours de la description donnée ci-après en regard des dessins ci-annexés. Dans ces dessins :
- la figure 1 est une vue de dessus schématique éclatée d'une réglette selon la présente invention,
- la figure 2 correspond à la figure 1 et montre schématiquement la réglette assemblée,
- la figure 3 est une vue partielle à échelle agrandie de la face avant de la réglette selon la figure 1,
- la figure 4 est une vue partielle de dessus et en coupe de la réglette, donnée à échelle agrandie, selon la ligne IV-IV de la figure 3,
- la figure 5 est une vue de côté selon la flèche V de la figure 4,
- la figure 6 est une vue en demi-coupe verticale de la réglette, faite selon la ligne VI-VI de la figure 3,
- la figure 7 est une autre vue en demi-coupe partielle de la réglette, selon la ligne VII-VII de la figure 3,
- la figure 8 est une vue en coupe partielle agrandie, selon la ligne VIII-VIII de la figure 6, pour une position dite verrouillée de la réglette,
- la figure 9 correspond à la figure 8, pour une position dite de déverrouillage de la réglette,
- la figure 10 est une vue schématique de dessus d'une première variante de réalisation de la réglette, portant sur son mode de verrouillage et déverrouillage,
- la figure 11 représente l'élément assurant le verrouillage et déverrouillage de la réglette de la figure 10,
- les figures 12 et 13 sont des vues schématiques de dessus et de face d'une deuxième variante de réalisation de la réglette, portant sur un autre mode de verrouillage et déverrouillage,
- la figure 14 montre en coupe l'un des éléments de verrouillage et de déverrouillage de la réglette selon les figures 12 et 13,
- la figure 15 est une demi-coupe d'une autre variante de réalisation de la réglette, donnée par rapport à la figure 6 et portant sur la constitution de la réglette elle-même,
- la figure 16 est une vue partielle de la réglette, selon la flèche XVI de la figure 15,
- la figure 17 représente l'un des contacts de la réglette selon la figure 15.

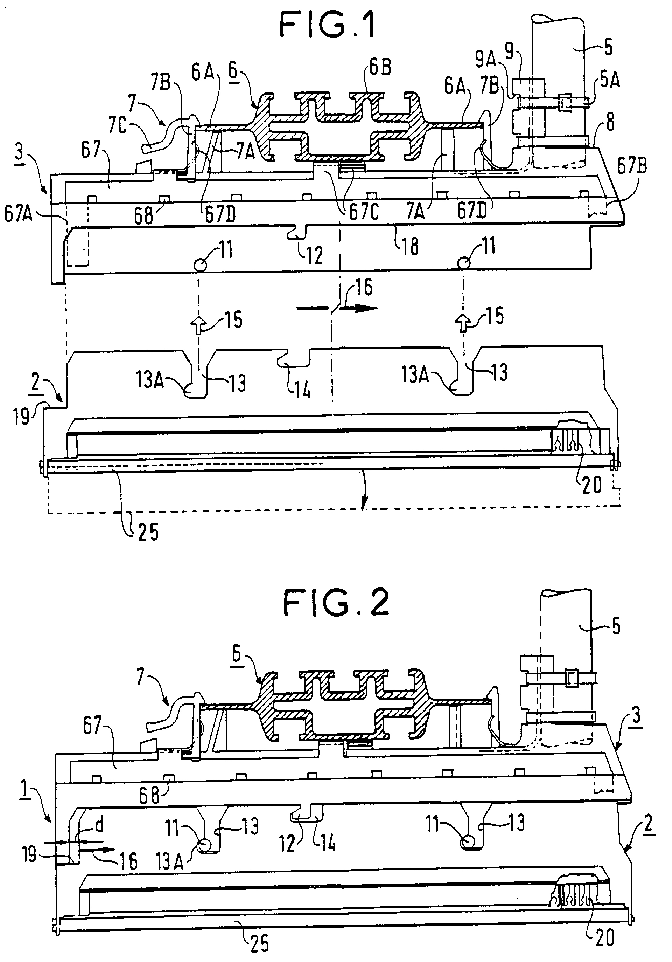

En regard des figures 1 et/ou 2, on voit que la réglette selon l'invention est constituée par un ensemble ou corps isolant 1, de forme générale parallélépipédique, qui est séparable en deux parties l'une avant 2 et l'autre arrière 3.

La partie avant 2 est dite bloc de raccordement et est affectée aux fils de jarretières, non représentées et désignées ci-après sous la référence 4. La partie arrière 3 est dite socle et est affectée à la réception d'un câble multiconducteurs 5 et à la fixation de la réglette sur un rail porteur 6.

L'arrière du bloc 2 s'encastre partiellement sur l'avant du socle 3 pour leur assemblage. Le verrouillage du bloc sur le socle et son déverrouillage possible sont précisés ultérieurement. Ce déverrouillage possible du bloc sur le socle et leur désassemblage permettent d'accéder aux points de raccordement individuels des conducteurs du câble dans la réglette, ces points de raccordement étant situés sensiblement au niveau de l'interface interne entre le bloc et le socle et plus précisément dans une réalisation préférée sur la face avant du socle et dans une variante sur la face arrière du bloc ainsi que décrit également ci-après.

La face arrière du socle est équipée de moyens de fixation 7 sur le rail 6. Ces moyens de fixation 7 sont centrés sur la face arrière du socle . Ils sont constitués par une paire de pattes internes 7A, relativement rigides et dites de butée pour le rail et une paire de pattes externes élastiques 7B, d'encliquetage sur le rail 6. Ce rail 6 est formé par un profilé rectiligne, à ailes d'accrochage 6A de part et d'autre d'une partie centrale nervurée 6B, ou peut en variante être un rail de profilé en U.

La face arrière du socle 3 présente, également, une entrée 8 du câble 5, prévue latéralement sur les moyens de fixation 7, d'un seul côté de ceux-ci. Elle présente en outre, entre cette entrée 8 et la patte d'encliquetage 7B voisine, une patte 9 d'accrochage du câble; des encoches 9A, sur sa face tournée vers la patte 7B, assurent la retenue de colliers serre-câble 5A.

La partie arrière du bloc 2 et la partie avant du socle 3 sont emboîtables l'une sur l'autre. Elles présentent des moyens de guidage et d'immobilisation ou verrouillage complémentaires. Ce sont des plots 11 et au moins un doigt 12 sur les parois de la partie avant du socle et des encoches 13 et au moins une rampe 14 dans les parois de la partie arrière du bloc, dans la réalisation selon les figures 1 et 2.

Les plots et le doigt sont prévus à des niveaux différents sur la partie avant du socle. Les plots sont cylindriques. Le doigt a une forme globale de crochet d'encliquetage.

La profondeur des encoches assure le bon guidage du bloc sur le socle fixe sur le rail. Ces encoches et la rampe sont ouvertes sur la face arrière du bloc. La rampe 12 et la partie terminale 13A des encoches 13 laissent un débattement possible du doigt sur la rampe et des plots au fond des encoches quand le bloc est à fond sur le socle. Les bords latéraux du bloc sur le socle permettent le même débattement entre eux, noté d, pour l'immobilisation ou verrouillage du bloc sur le socle et son déverrouillage puis retrait.

Dans la figure 1, les flèches 15 traduisent le montage du bloc sur le socle, avec guidage des plots sur la profondeur des encoches. Dans les figures 1 et 2, la flèche 16 traduit le verrouillage du bloc sur le socle, obtenu par actionnement en translation du bloc sur la longueur du débattement possible d. Un épaulement longitudinal 18 sur le socle et un épaulement latéral 19 sur le bloc définissant la position à fond du bloc sur le socle, quand les plots sont au fond des encoches et le doigt dans sa rampe. Ils guident le bloc sur le socle lors de son actionnement en verrouillage et en déverrouillage sur le socle.

Le mode d'actionnement et le verrouillage ou déverrouillage obtenu sont précisés ci-après.

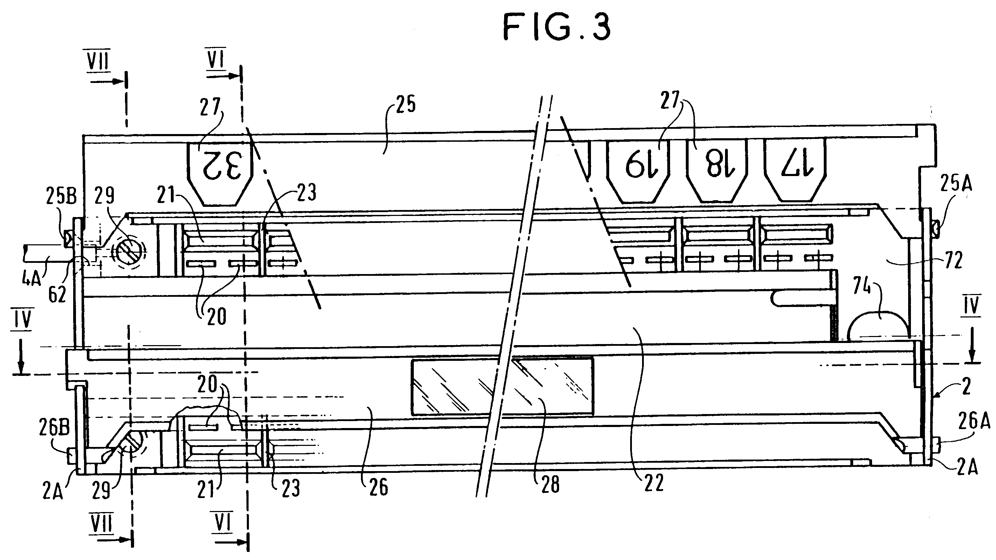

L'équipement de la face avant de la réglette 1 ou plus précisément de la face avant du bloc 2 est donné en regard de ces figures 1 et 2 et plus particulièrement de la figure 3.

Le bloc de raccordement 2 présente deux rangées de connexions autodénudantes 20, saillantes sur sa face avant le long de ses grands côtés. Ils présentent en outre deux rangées de puits 21 ouverts sur sa face avant; ces deux rangées de puits sont associées aux deux rangées de connexions autodénudantes, chacune d'elles s'étend entre la rangée de connexions autodénudantes correspondante et le bord longitudinal de la face avant.

Les deux rangées de connexions autodénudantes 20 sont séparées l'une de l'autre par une gorge médiane 22. Les jarretières desservant les deux rangées de connexions autodénudantes sont reçues et maintenues dans cette gorge. Elles y rentrent à l'extrémité de la gorge située à l'opposé de l'entrée 8 de câble sur l'arrière du socle, par une ouverture latérale non représentée prévue sur le bloc 2.

Ces puits 21 sont dits puits de coupure. Chacun d'eux correspond à deux connexions autodénudantes d'une même rangée, recevant les deux fils de jarretière de raccordement à une paire de conducteurs ou ligne du câble rentrant dans le socle.

Ces connexions autodénudantes 20 sont dans l'exemple illustré du type à fourche simple. Les fils isolés de jarretière y sont raccordés à l'aide d'un outil, par simple insertion dans la fente entre les deux branches élastiques de chaque fourche.

Des cloisons 23 séparent les uns des autres les puits de coupure de chaque rangée ainsi que les paires de connexions autodénudantes successives pour les deux fils de jarretière à raccorder à chaque paire de conducteurs du câble.

En regard de cette même figure 3, on précise immédiatement que la réglette est équipée de deux demi-couvercles ouvrants 25 et 26 sur sa face avant. Ces demi-couvercles couvrent l'une et l'autre des deux rangées de connexions autodénudantes 20 sur la face avant du bloc de raccordement, avec leur rangée de puits de coupure associée. Ces deux demi-couvercles ont chacun les deux extrémités de l'un de leurs bords longitudinaux formant deux ergots saillants 25A, 25B ou 26A 26B. Ces ergots sont engagés à travers les deux extrémités des deux petits côtés 2A de la face avant du bloc, prévus saillants sur les connexions autdénudantes. Ils définissent ainsi l'axe d'articulation de chaque demi-couvercle pour leur ouverture sur l'extérieur du bloc. Le demi couvercle 25 est montré ouvert, l'autre 26 est montré fermé.

Ces deux demi-couvercles considérés fermés portent sur leur face interne des repères d'identification 27, ou en variante des étiquettes individuelles rapportées, en regard des connexions autodénudantes considérées par paires numérotées de 1 à 32, pour la réglette illustrée affectée au raccordement d'un câble de 32 paires, et sur leur face opposée externe une étiquette 28 d'identification de la réglette elle-même ou plus précisément de sa fonction dans le répartiteur. Ils ont leurs bords renforcés et présentent des nervures définissant les emplacements d'identification.

Sur cette même face avant du bloc 2, deux vis 29, de part et d'autre de la gorge 22 à son extrémité d'entrée des jarretières, sont affectées au raccordement à la masse de l'écran de masse des jarretières desservant les deux rangées de connexions autodénudantes. On précise simplement que cet écran est constitué par un fil dit de masse enroulé avec un feuillard métallique autour des deux fils de jarretière. Les fils de masse 4A des jarretières sont insérés par une entrée notée 62 en bout du bloc 2.

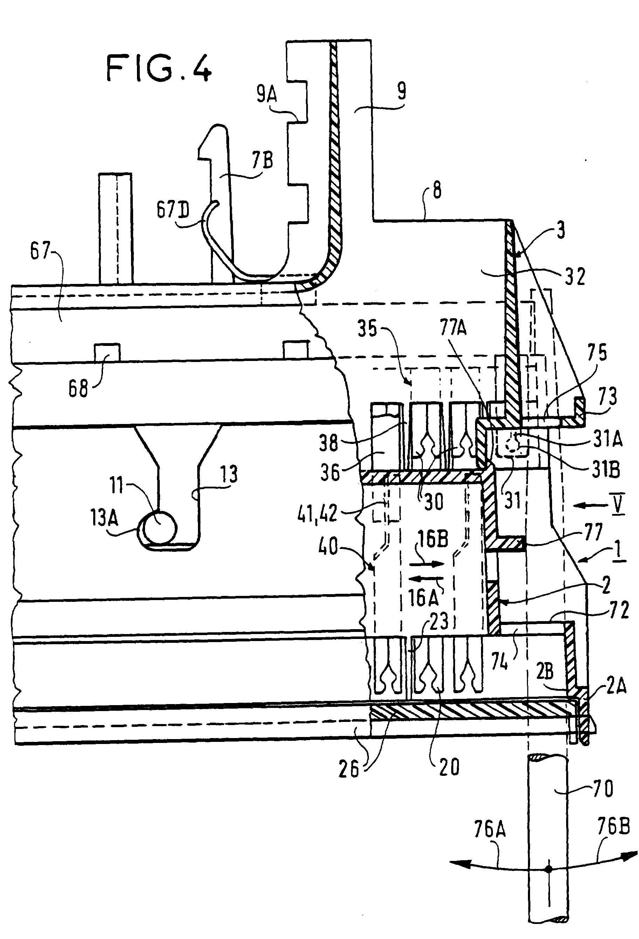

La figure 4 montre les connexions autodénudantes 20 qui sont du type fourche simple disposée dans le sens longitudinal de la réglette. Ces connexion autodénudantes sont saillantes sur la face avant du bloc 2, seuls les petits côtés 2A du bloc étant laissés saillants sur elles pour porter les demi-couvercles qui les recouvrent.

Cette figure 4 montre que le socle 3 est lui-même équipé de connexions autodénudantes 30, disposées comme les connexions autodénudantes 20 en deux rangées sur la longueur du socle. Ces connexions autodénudantes 30 sont également du type fourche simple montée dans le sens longitudinal. Elles sont non saillantes mais pour autant accessibles sur la face avant du socle.

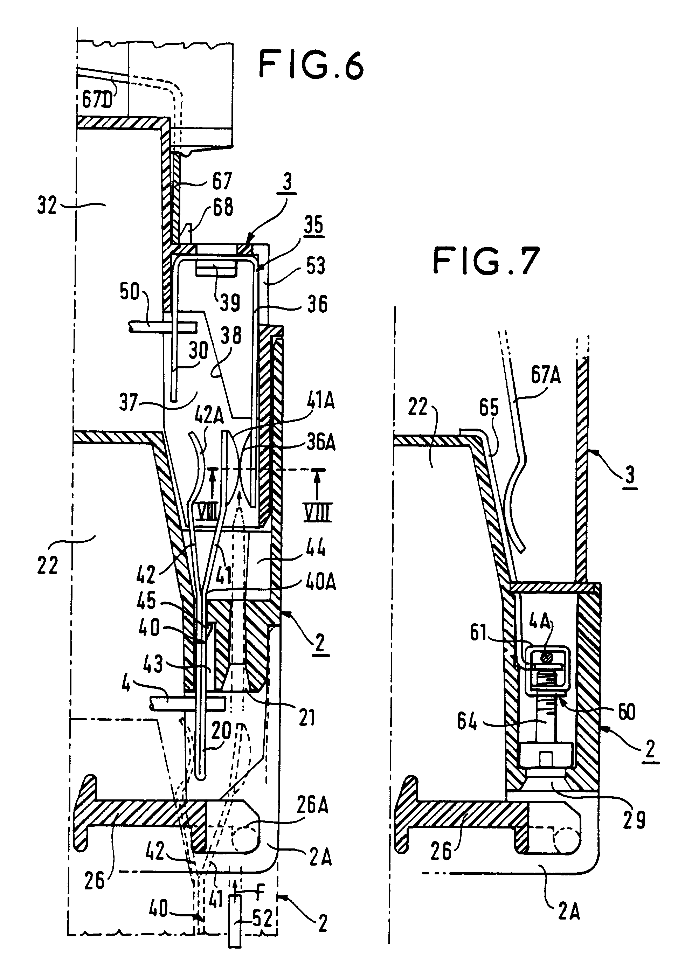

Le socle porte en outre une connexion autodénudante supplémentaire 31, dite de masse, au bout de chaque rangée de connexions autodénudantes 30, du côté de l'entrée 8 de câble dans le socle. Il présente entre ses deux rangées de connexions autodénudantes 30 une gorge profonde 32 (figure 6) ouverte le long de sa face avant.

Cette gorge reçoit le ou les câbles depuis l'entrée 8. Ce ou ces câbles sont séparés dans cette gorge en leurs paires de conducteurs à raccorder aux connexions autodénudantes 30 considérées par paires sur chaque rangée.

La connexion autodénudante de masse 31 est quant à elle à fente non débouchante 31A dans une lame, définissant de part et d'autre d'elle les deux branches élastiques de sectionnement de l'isolant de conducteur. Cette fente se termine dans un trou 31B, au voisinage du bord terminal avant de la lame servant d'entrée au fil de masse de chacun des câbles dans la fente 31A. Ces fils de masse raccordés à la connexion 31 sont superposés les uns aux autres dans sa fente 31A.

Le raccordement interne des connexions autodénudantes 20 et 30, dans la réglette 1 est décrit en se référant à la figure 4 et plus particulièrement à la figure 6 montrant deux de ces connexions qui se correspondent en rang sur leur rangée.

Cette figure 6 montre que la connexion autodénudante 20 appartient à un contact 40 défini par une lame double ou repliée sur elle-même. La connexion autodénudante 20 est formée au bout de cette lame, sur sa partie repliée sur elle-même. Ce même contact 40, à l'opposé de la connexion autodénudante 20, définit deux queues de connexion 41 et 42 séparées l'une de l'autre, par un pli 40A entre la queue 41 et la connexion autodénudante. Ces deux queues de connexion présentent chacune un embouti terminal, 41A ou 42A, tourné vers l'extérieur du bloc 2.

Ce contact 40 est maintenu bloqué dans le bloc 2. Ce bloc présente à cet effet un logement individuel avant 43 pour la partie intermédiaire entre la connexion autodénudante 20 et les queues de connexion et un logement 44 pour les queues de connexions des différents contacts 40 de chaque rangée. La connexion autodénudante terminale 20 est saillante sur le logement 43 pour recevoir un fil de jarretière 4. Une ouverture entre les logements individuels 43 et le logement 44 et un crevage 45 d'un côté de la lame et au niveau du fond du logement individuel 43 assurent la retenue du contact 40 dans le bloc.

La connexion autodénudante 30 appartient quant à elle à un contact 35 défini par une lame pliée en U.

Elle est formée sur l'une des branches du U tandis que l'autre branche constitue une queue de connexion 36. Cette queue de connexion 36 est plus longue que la première branche ou connexion autodénudante 30. Elle est à embouti terminal 36A tourné vers l'intérieur du socle 3 et en contact contre l'embouti terminal 41A de la queue de connexion 41 du contact 40, quand le bloc 2 est dit verrouillé sur le socle 3.

Ce contact 35 est bloqué élastiquement dans une goulotte 37 définie latéralement sur la gorge médiane 32, de chaque côté de cette dernière. Cette goulotte 37 a son fond en retrait sur la face arrière du socle ou fond de la goulotte 32. Elle est par ailleurs divisée en alvéoles individuels pour les contacts 35, par des cloisons 38. Sa paroi interne, entre elle et la gorge 32, est peu saillante sur son fond, pour un accès aisé à la connexion autodénudante 30 venant contre cette paroi interne et restant largement saillante sur elle et recevant un conducteur 50 de câble.

Une patte interne 39 sur le fond de chaque alvéole de la goulotte 37 assure en outre le maintien en place de chaque contact 35.

La séparation du corps ou de la réglette elle-même en deux parties et la disposition des connexions autodénudantes sur la face avant du bloc 2 où elles sont toutes affectées aux jarretières et sur la face avant du socle 3 où elles sont toutes affectées aux paires de conducteurs du ou des câbles permettent une très grande densité de points de raccordement par rapport aux réglettes à raccordement uniquement frontal, et son utilisation sans problème pratique pour un câble ou plusieurs câbles.

En outre cette disposition en parties séparables permet d'accéder aux points internes définis par les connexions autodénudantes du socle pour le raccordement du ou des câbles de distribution sur site, ou pour toute intervention sur les raccordements individuels des conducteurs de câbles. Elle permet aussi un précablage en usine, en particulier pour les réglettes à relier à l'autocommutateur, celles-ci étant livrées sur site avec leur socle auquel est raccordé et testé en usine un câble de 32 paires de liaison avec l'autocommutateur.

Enfin cette disposition permet un changement plus aisé d'autocommutateurs, en minimisant le temps d'arrêt de fonctionnement de l'installation globale, par installation et câblage d'un nouvel autocommutateur en parallèle sur l'ancien et approvisionnement de nouveaux socles précâblés et présentant la longueur nécessaire de câble de liaison au nouvel autocommutateur. La mise en place définitive du nouvel autocommutateur se fait alors par simple changement des socles des réglettes côté autocommutateur, les nouveaux socles recevant les blocs de raccordement existants, ce qui évite de recâbler le jarretièrage.

Dans la figure 6, on voit en outre clairement le puits de coupure 21 associé à la connexion autodénudante 30 représentée et à celle adjacente, qui forment ensemble la paire de connexions pour les deux fils de jarretière à raccorder aux conducteurs d'une même paire. Ce puits 21 débouche directement dans le logement 44, en regard des emboutis terminaux 41A et 36A sur les queues de connexion 41 et 36 correspondantes. Il sert à l'insertion éventuelle d'un circuit 52, comme illustré par la flèche F, entre les emboutis en contact élastique. Ce circuit 52 est notamment une cale de coupure, ou une cale de test, ou encore une carte de circuit imprimé de raccordement à une protection de surtension ou à un parafoudre extérieur à la réglette et non représenté.

Le socle 3 présente également une fenêtre 53 en regard de chacun de ses contacts 35 ainsi rendus accessibles depuis l'extérieur de la réglette. Cette fenêtre 53 permet le raccordement àl'un des contacts 35 d'un circuit annexe, à frotteur de liaison sur ce contact, qui est rapporté contre la réglette.

Ce circuit annexe, non représenté, est un boîtier de protection à surtenseur ou un circuit adapteur d'impédance ou encore une carte imprimée d'un circuit informatique. Son frotteur de liaison vient à travers la fenêtre 53 directement en contact contre la queue de connexion 36 du contact 35.

Cette même figure 6 montre, en outre, que les parties arrière et avant du bloc de raccordement sont quant à elles avantageusement prévues complémentaires l'une de l'autre. Cette disposition permet l'empilage possible d'un nouveau bloc de raccordement, tel que représenté partiellement en pointillés, sur le bloc 2 en place sur le socle 3, par emboitage de la partie arrière de ce nouveau bloc sur la partie avant du bloc en place.

Ce nouveau bloc est identique au bloc 2 et désigné par la même référence 2.

Quand il est emboîté sur le bloc 2, la queue de connexion 42 de son contact 40 est en contact élastique contre la partie terminale de la connexion autodénudante 20 du contact 40 de même rang dans sa rangée, sur laquelle est laissé raccordé le fil de jarretière 4. Cet empilage d'un nouveau bloc sur le bloc 2 permet de réaliser des tests électriques ou des dérivations, sans pour autant perturber le fonctionnement du répartiteur auquel appartient le bloc 2 en place sur le socle.

Outre la continuité électrique entre les contacts 40 et 35 réalisée à l'intérieur de la réglette, dans la partie arrière du bloc et la partie avant du socle emboîtées l'une dans l'autre, la réglette assure également les continuités de masse ramenée sur le rail métallique de fixation.

La figure 7 montre l'une des deux bornes de masse 60 prévues en bout de la réglette, du côté de l'entrée des jarretières dans la goulotte 22 du bloc, recevant leur fil de masse 4A. Ce raccordement est assuré à l'aide de la vis 29 correspondante, accessible sur la face avant du bloc (figure 3). Ces bornes de masse sont équivalentes aux contacts de masse 31 affectés aux fils de masse des câbles (figure 4).

La borne de masse 60 est définie par un étrier métallique 61 refermé sur lui-même, monté à l'intérieur du bloc.

Il lui correspond l'entrée 62 de fil de masse, prévue en bout du bloc 2, (fig 3) latéralement sur l'entrée des jarretières dans la goulotte 22. L'extrémité d'une lame de liaison 65 est prisonnière à l'intérieur de l'étrier. Cet étrier est fixé en bout de la tige 64 de la vis 29 et actionné à l'intérieur du bloc par cette vis. Il vient serrer contre l'extrémité de la lame 65. Les fils de masse qu'il reçoit, soit 16 fils de masse pour les 16 jarretières desservant chaque rangée de connexions autodénudantes de la face avant du bloc 2. La lame 65 s'étend par ailleurs contre la face externe de la gorge 22 et est bloquée sur le fond de cette gorge.

Deux barrettes de masse 67 montées dans le socle 3 ont l'une de leurs extrémités reliées par deux lames 65 aux deux bornes de masse 60.

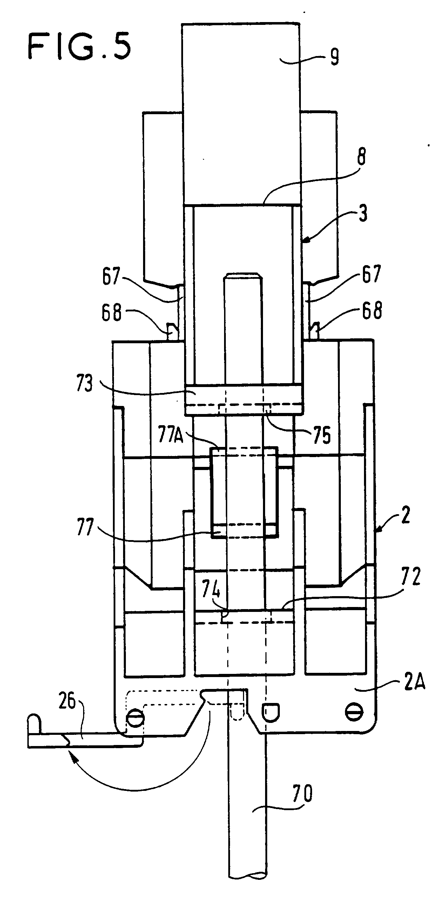

L'une des deux barrettes de masse 67 est montrée dans les figures 1, 2, 4 et 6, les deux barrettes apparaîssant dans la figure 5. Cette barrette de masse 67 court sur la longueur du socle, contre l'une ou l'autre des parois supérieure et inférieure de sa partie arrière. Elle est retenue contre cette paroi par une série de pattes 68 prévues sur le fond de chaque goulotte 37. Son extrémité 67A forme une excroissance saillante sur sa largeur, qui est ramenée à l'intérieur de la goulotte correspondante 37, du côté de l'entrée des jarretières dans le bloc 2, et vient en pression élastique sur la lame de liaison 65 de la borne de masse correspondante 60 montée dans le bloc.

L'autre extrémité 67B (figure 1) de chaque barrette de masse 67 forme directement le contact de masse correspondant 31 affecté aux fils de masse des câbles (figure 4), ou lui est reliée par des dispositions appropriées, non représentées, en tant que telles à la portée de l'homme de l'art.

Chacune des deux barrettes de masse 67 le long du socle, sur ses parois supérieure et inférieure, présente une première patte de contact 67C avec le rail porteur 6 rectiligne et avantageusement une deuxième patte de contact 67D avec un rail porteur profilé en U. La patte 67C est saillante sur le bord longitudinal arrière de la barrette 67, sensiblement sur sa partie médiane et est repliée sur l'arrière du socle. Elle vient directement en contact, avec la partie centrale nervurée 6B du rail 6. La patte 67D est prévue d'un seul côté de la patte 67C et est comme elle saillante sur la barrette et repliée sur l'arrière du socle 3. Cette deuxième patte 67D définit un contact élastique ramené contre la patte d'encliquetage correspondante 7B, pour assurer la continuité de masse avec le rail porteur, quand celui-ci n'est plus rectiligne mais un profilé en U.

L'un des modes possibles d'actionnement du bloc 2 de sa position de verrouillage à sa position de déverrouillage sur le socle, ou inversement, est décrit en se référant aux figures 3 à 5. Il est assuré par un outil 70, du genre tournevis ou analogue utilisé en levier.

Pour cet actionnement, la réglette présente, en bout et du côté de l'entrée arrière 8 de câble, une patte terminale d'actionnement 72 sur la face avant du bloc entre ses rangées de connexions autodénudantes 20 et son petit bord saillant 2A, et une patte terminale d'actionnement 73 correspondante sur la face avant du socle. La patte 72 a une lumière 74 et la patte 73 un trou 75 dans lesquels est inséré l'outil 70. Le trou 75 joue le rôle de point pivot de l'outil, la lumière 74 définissant son jeu possible quand il est actionné en levier selon les flèches 76A, 76B. Une patte souple 77 sur le bloc sert de levier de déverrouillage pour déverrouiller le bloc, dont la face arrière présente une butée 77A contre le bout du socle. Ce déverrouillage est obtenu par l'outil en appui sur cette patte 77 et actionné selon la flèche 76A. La translation du bloc selon la flèche 16A le fait alors passer de sa position de verrouillage, dans laquelle il est montré dans la figure 4, à sa position de déverrouillage. Un épaulement intérieur 2B sur le bord du bloc sert de point d'appui à l'outil actionné selon la flèche 76B pour la translation du bloc selon la flèche 16B en position de verrouillage sur le socle.

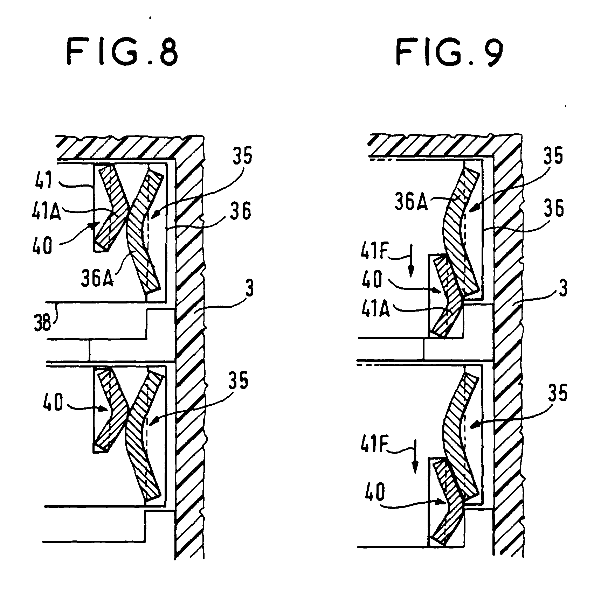

Le verrouillage et le déverrouillage obtenus sont expliqués en regard des figures 8 et 9 et de la figure 6.

Les figures 6 et 8 illustrent la position de verrouillage, pour laquelle les queues de connexions 36 et 41 des contacts 35 et 40 ont leurs emboutis 36A et 41A en pression l'un contre l'autre, avec les sommets de ces emboutis sensiblement dans le même plan et le sommet de l'embouti 41A légèrement à l'arrière du sommet de l'embouti 36A. Ce positionnement relatif de ces emboutis en pression l'un contre l'autre résulte de la pression exercée par la queue de connexion 36 et son embouti 36A, dont le débattement possible est rendu quasi nul par la paroi du socle. Cette pression sollicite la queue de connexion 41, à l'encontre de la pliure initiale 40A qu'elle présente sur la connexion autodénudante 20. Elle a pour effet de la tendre, ainsi qu'il ressort de sa comparaison avec la queue de connexion correspondante 41 du bloc 2 montré empilé sur le bloc 2, dans la figure 6. Ce positionnement relatif des emboutis 41A et 36A des deux rangées de contacts 40 et 35 garantit à lui seul le verrouillage du bloc 2 sur le socle. Il nécessite une force importante pour la séparation directe du bloc du socle. Cette séparation est rendue aisée par mise préalable du bloc 2 dans sa position de déverrouillage donnée dans la figure 9 et obtenue par actionnement du bloc selon la flèche 16 A de la figure 4, sur la course du débattement d de la figure 2.

Par cette translation du bloc, l'embouti 41A a glissé sur l'embouti 36A et s'est décalé latéralement sur ce dernier; il échappe quasi totalement à la pression exercée précédemment sur lui. Ce décalage est égal au débattement d et correspond à la largeur de chaque queue de connexion ou à un demi-pas entre les contacts d'une même rangée. Lors de ce décalage la queue de connexion 41 reprend sa pliure initiale 40A, comme montré sur la queue de connexion 41 du bloc empilé sur celui en place (figure 6) sur le socle, et la crête de l'embouti 41A se repositionne à l'avant de la crête de l'embouti 36A, comme traduit par la flèche 41F. Dans ces conditions le bloc 2 est séparable du socle, sans effort important nécessaire.

Le bloc 2 est mis de manière analogue de sa position de déverrouillage dans sa position de verrouillage,par simple translation en sens inverse.

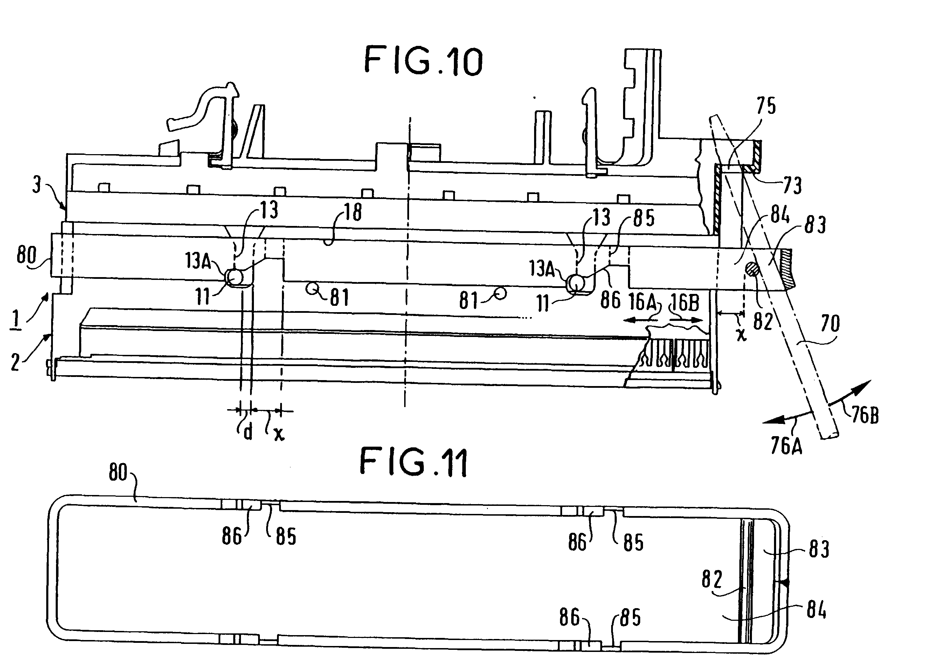

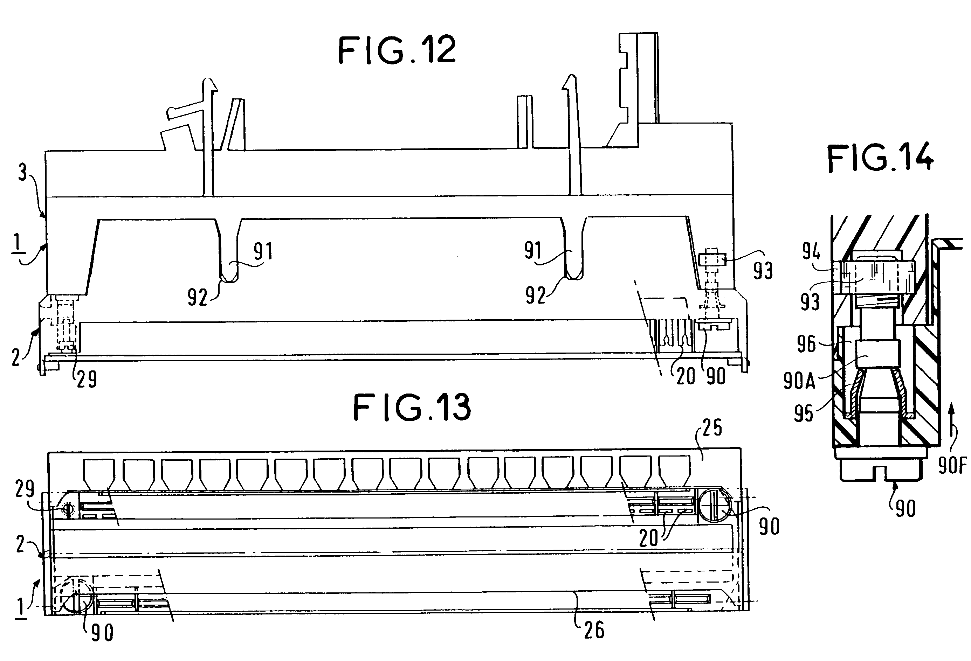

Les figures 10 et 11 illustrent une variante de réalisation de la réglette décrite ci-avant en ce qui concerne uniquement les dispositions prévues pour l'actionnement en translation du bloc sur le socle et seules précisées ci-après en regard des dispositions précédentes. La réglette selon cette variante reste désignée par référence globale 1, le bloc par la référence 2 et le socle par la référence 3.

Dans cette variante, l'actionnement en translation du bloc 2 sur le socle 3 est toujours effectué à l'aide de l'outil précité 70 actionné en levier, mais cet outil n'agit plus directement sur le bloc mais sur un cadre métallique 80 rapporté sur le bloc qu'il entoure.

Ce cadre 80 est monté et maintenu sur la partie arrière du bloc inséré sur le socle entre le rebord 18 du socle et des plots de butée 81 du bloc. Il présente, en regard de la patte d'actionnement 73, à trou 75, prévue dans cette variante sur la partie arrière et non avant du socle, une partie terminale saillante équipée d'un axe d'actionnement 82.

Cet axe 82 délimite d'un côté une fenêtre terminale 83 et de l'autre, entre lui et le bloc une autre fenêtre 84.

Ce même axe permet un déplacement du cadre seul sur le bloc sur une course, notée x, correspondant à la largeur de la fenêtre 84.

Dans cette variante, pour le montage du bloc sur le socle, le socle ne comporte que les plots de guidage 11 et le bloc que les encoches précitées 13 dont les parties terminales 13A permettent le débattement d des plots 11 au fond des encoches. Le cadre 80 comporte quant à lui une rainure intérieure 85 de réception de chaque plot 11. Chaque rainure 85 est largement ouverte sur le bord avant du cadre et forme une rampe 86 de guidage du plot 11 jusqu'au fond 13A de l'encoche 13, par le déplacement x du cadre sur le bloc.

Cette rampe de guidage pallie toute mauvaise insertion possible des plots 11 jusqu'au fond des différentes encoches 13, pour l'obtention du déplacement supplémentaire sur le débattement d du cadre et du bloc par rapport au socle.

Pour l'actionnement du bloc de sa position de déverrouillage en position de verrouillage, l'outil 70 est inséré dans la fenêtre terminale 83 du cadre et le trou 75 de la patte 73 du socle, et est actionné selon la flèche 76B. Pour l'actionnement inverse, en déverrouillage, l'outil 70 inséré dans la fenêtre 83 est actionné selon la flèche 76A. Dans les deux cas, l'outil sollicite le cadre, qui transmet l'effort reçu au bloc, pour le décalage latéral égal au débattement d des emboutis 41A et 36A, comme expliqué en regard des figures 8 et 9.

Les figures 12 et 13 montrent une autre variante de réalisation de la réglette selon l'invention quant aux dispositions de montage et de verrouillage du bloc sur le socle. La réglette, le bloc et le socle étant par ailleurs non modifiés, ils restent désignés sous leurs références précédentes. Seules ces dispositions spécifiques sont décrites ci-après.

Dans cette variante, le bloc 2 est inséré et verrouillé sur le socle 3, sans mise en position intermédiaire de déverrouillage, comme précédemment. La réglette 1 comporte à cet effet, deux vis d'assemblage 90 diamétralement opposées. L'une de ces vis d'assemblage est prévue en lieu et place de l'une des deux vis de masse précitées 29, la réglette ne comportant plus qu'une seule vis de masse. La réglette comporte en correspondance pour le guidage du bloc sur le socle, des doigts rectilignes 91 sur la partie avant des parois supérieure et inférieure du socle et des encoches 92 correspondantes sur le bloc, recevant pratiquement sans jeu latéral les doigts 91.

Les deux vis d'assemblage 90 sont actionnées alternativement sur des faibles courses jusqu'à l'obtention du blocage de bloc sur le socle. L'une de ces vis 90 est illustrée dans la figure 14 à plus grande échelle.

Chaque vis d'assemblage 90 est à tige filetée sur sa partie terminale et présentant un épaulement intermédiaire 90A. Un écrou rectangulaire 93 est monté dans une lumière ouverte du socle. Cet écrou reçoit la partie terminale filetée de la tige de vis 90. Une bague métallique 95 à bord avant épaulé entoure la tige de vis et est dans un logement 96 prévu dans le bloc et ouvert sur la face arrière du bloc. Cette bague 95 est bloquée entre l'épaulement 90A de la tige de la vis 90 et le fond du logement 96.

L'insertion et le verrouillage du bloc 2 sur le socle se font par déplacement du bloc selon la flèche 90F, obtenu en vissant chaque vis 90 dans son écrou 93.

L'effort de déplacement selon cette flèche 90F est appliqué au bloc par la tête de la vis en appui sur la face avant du bloc, jusqu'à ce que le bloc soit en butée contre le socle.

Le déverrouillage du bloc sur le socle et leur séparation sont obtenus par déplacement inverse du bloc en dévissant chaque vis 90. L'effort de déplacement en sens inverse de la flèche 90F est transmis par l'épaulement 90A de la vis au bloc 2, à travers la bague 95.

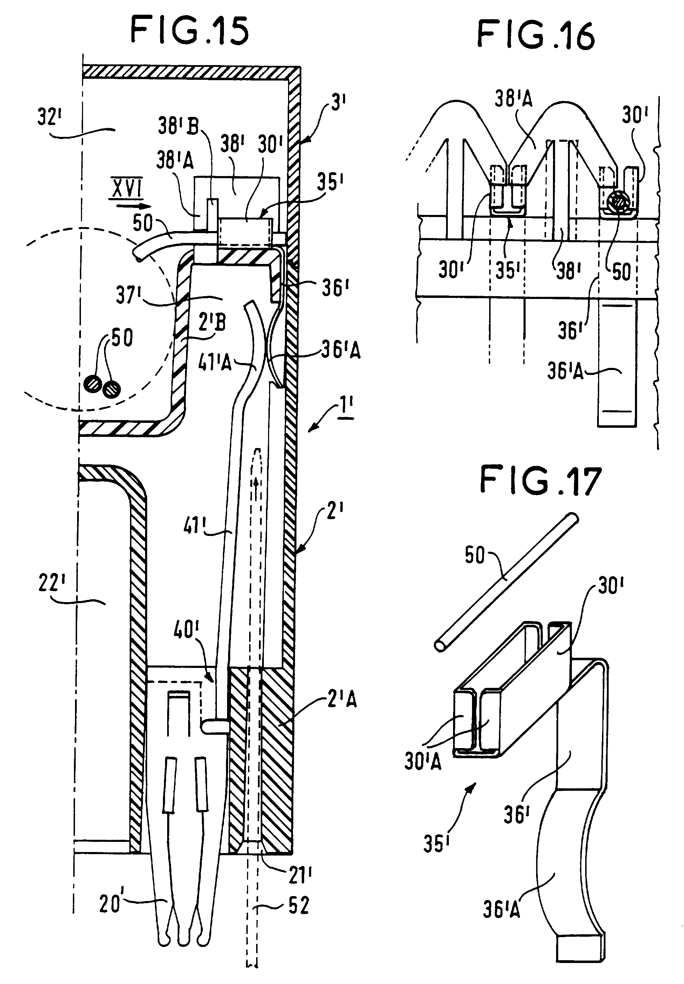

La figure 15 représente une autre variante de réalisation de la réglette selon l'invention, portant sur la constitution de la réglette elle-même. Elle est illustrée en demi-coupe comparable à la demi-coupe illustrée dans la figure 6.

On précise ci-après ses différences essentielles par rapport à la figure 6, en adoptant les mêmes références numériques accompagnées du signe "prime" pour les éléments ayant des fonctions comparables.

La réglette selon cette variante est désignée sous la référence globale 1'. Elle est constituée par un bloc de raccordement 2' séparable en deux parties dites avant 2'A et arrière 2'B, assemblées l'une à l'autre, et par un socle 3'. Le bloc 2' est lui-même séparable du socle 3' sur lequel il est fixé.

La partie avant 2'A du bloc 2' est affectée au raccordement des fils de jarretières. Elle porte deux rangées de connexions autodénudantes 20' appartenant à des contacts individuels 40' logés dans la partie 2'A. Les connexions autodénudantes 20' sont saillantes sur la face avant de la partie 2'A. Elles sont dans cette variante du type à fourche double disposée transversalement à la face avant. Chaque contact 40' présente une queue de connexion 41' formée transversalement à la connexion autodénudante 20' et présentant un embouti terminal 41'A accessible sur la face arrière ouverte et cloisonnée de la partie 2'A du bloc 2'.

Comme dans la figure 6, à chaque rangée de connexions autodénudantes 20' ou contacts 40' est associée une rangée de puits 21' débouchant en regard des emboutis 41'A et pouvant recevoir chacun une cale de coupure 52 ou une carte de test. Les deux rangées de connexions autodénudantes 20' sont séparées par une gorge médiane 22' recevant les jarretières les desservant.

La partie arrière 2'B du bloc 2' est quant à elle affectée au raccordement des conducteurs 50 de câble. Elle porte deux rangées de connexions, notées 30' par analogie avec les connexions 30 de la figure 6, qui sont de préférence des connexions autodénudantes et appartiennent à des contacts individuels notés 35'. Ces contacts 35' sont portés par la partie 2'B du bloc 2', avec leurs connexions autodénudantes 30' restant accessibles sur la face arrière de cette partie 2'B et s'étendant dans l'interface de raccordement du bloc 2' assemblé sur le socle 3'. Ils présentent chacun une queue de connexion 36' à embouti terminal ou connexion terminale préformée 36'A. Cet embouti 36'A reçoit en pression contre lui l'embouti 41'A du contact 40', de même rang dans la rangée correspondante, à l'intérieur d'une goulotte latérale 37' définie par la partie avant 2'A sur la partie arrière 2'B du bloc 2'.

Les deux rangées de contacts 35' sont séparées l'une de l'autre. Elles s'étendent le long de l'un et l'autre des deux bords de la face arrière de la partie 2'B, qui définit avec le socle 3' la gorge 32' affectée aux conducteurs de câble raccordés aux connexions 30'.

Ainsi que visible dans les figures 15 et 16, les connexions 30' de chacune des deux rangées sont séparées les unes des autres par des pattes 38' appartenant à la partie 2'B et saillantes sur sa face arrière. Chaque patte présente deux languettes élastiques 38'A, s'étendant d'un côté et de l'autre d'elle depuis son bord terminal et définissant ensemble un V, avec la patte centrale entre les branches du V. Ces languettes sont de largeur moindre que celle de la patte qui les porte, elles laissent une ouverture 38'B entre elles et les connexions 30', pour leur élasticité. Les extrémités des languettes voisines sur deux pattes adjacentes aboutissent en regard de la connexion entre les deux pattes, sensiblement selon l'axe de cette connexion. Elles assurent le guidage du conducteur à raccorder dans la connexion 30' et la retenue du conducteur raccordé.

Chacune des connexions autodénudantes 30' est de préférence, comme montré dans la figure 17, en forme de U. Ce U est ouvert face au fond du socle 3'. Chacun des deux bords 30'A des branches du U est replié l'un vers l'autre pour le sectionnement de l'isolant du conducteur 50 inséré entre eux dans cette connexion 30'. La queue de connexion 36' définit une lame élastique qui prolonge d'un côté le fond du U et est replié sur ce fond à l'opposé du U.

Dans cette variante, on note que le socle 3' sert uniquement à recevoir le ou les câbles et définir avec le bloc 2'B la gorge pour les conducteurs de câble, et à assurer la fixation de la réglette 1' sur son rail support, avec la continuité de masse sur ce rail. Les dispositions correspondantes n'apparaissent pas sur cette figure 15. Elles sont analogues à celles de la réglette des figures 1 à 7 et ne sont donc pas décrites.

On note en outre qu'un outil d'insertion des conducteurs dans leurs connexions autodénudantes 30' est avantageusement logé et maintenu dans le socle pour être disponible en cas de besoin.

Sur cette réglette, on prévoit des moyens d'assemblage des parties avant et arrière 2'A et 2'B du bloc 2' et des moyens indépendants d'assemblage du bloc 2' sur le socle. Ces moyens d'assemblage non représentés sont de préférence des pattes d'encliquetage et des fenêtres correspondantes prévues sur les parois latérales des parties à assembler l'une à l'autre.

Cette réglette est également équipée de deux demi-couvercles avant de protection de ses connexions autodénudantes 20', comme sur la réglette 1, permettant leur identification ou l'identification de la réglette.

Ses connexions autodénudantes internes 30' sont quant à elles rendues accessibles par séparation du bloc 2' du socle 3' et retournement du bloc 2', pour le raccordement des conducteurs de câble sur site ou toute intervention sur un raccordement défectueux ou à modifier.

Cette réglette peut également être précablée initialement, et livrée sur site équipée d'une longueur de câble à connecteur terminal et dont les conducteurs individuels sont raccordés aux connexions 30'. Cette disposition permet un changement plus aisé d'autocommutateurs. En effet, lors d'une telle manoeuvre, le nouvel autocommutateur peut être approvisionné précablé et relié à la partie arrière d'un nouveau bloc du raccordement. Il peut alors être installé à côté du premier. Lors de la mise en place définitive de ce nouvel autocommutateur, la partie arrière du bloc de raccordement de la nouvelle réglette peut recevoir la partie avant du bloc de raccordement de l'ancienne réglette, en évitant ainsi de recâbler le jarretiérage.

Cette réglette peut également recevoir une cale de coupure comme indiqué ci-avant. Elle peut aussi permettre des prises de potentiel à travers des fenêtres au droit des contacts 35' sur ses faces, pour une juxtaposition possible d'un module supplémentaire équipé de circuit parasurtenseur de protection à cette réglette.

On précise en outre, bien que non illustré, que la réglette selon l'invention est en outre adaptée pour recevoir non seulement des modules supplémentaires rapportés sur ses faces supérieure et/ou inférieure et équipés de frotteurs élastiques de liaison avec ses contacts internes 35, mais est également adaptée pour son raccordement possible avec report à distance de la protection par parasurtenseur des paires de conducteurs ou lignes à protéger.

Dans ce dernier cas, les parasurtenseurs individuels, appartiennent à un module distant. Ce module porte les parasurtenseurs et des connexions analogues aux connexions 20 précitées de la réglette, qui sont reliées par paire à chaque parasurtenseur. La paire de connexions autodénudantes 20, qui correspond à la ligne à protéger, est alors reliée à l'un des parasurtenseurs du bloc de protection par un cordon de jonction à connecteur terminal, à chacune des ses extrémités. L'un de ces connecteurs est enfichable sur la paire de connexions de la réglette et l'autre sur celle du module de protection.

## Revendications

1. Réglette de raccordement précâblable, assurant le brassage de raccordement entre des conducteurs de câbles (5) et des fils de jarretières, comportant un corps isolant équipé de moyens de fixation (7) sur une de ses faces dite arrière, pour le montage de ladite réglette sur un rail porteur (6), et portant des premières connexion (20,20') affectées aux fils de jarretière et des deuxièmes connexions (30, 30') affectées aux conducteurs de câble, caractérisée en ce que ledit corps (1,1') est constitué en au moins deux parties (2, 3; 2', 3') séparables l'une de l'autre, dites socle (3; 3') pour l'une d'elles arrière et bloc de raccordement (2; 2') pour l'autre avant, et assemblées avec la face arrière dudit bloc et la face avant du socle définissant un interface dit d'assemblage entre eux, et présente lesdites premières connexions (20, 20') disposées seules en au moins une rangée sur la face avant du bloc et lesdits deuxièmes connexions (30, 30') disposées, en correspondance en au moins une rangée mais dans ledit interface d'assemblage et accessibles quand le bloc (2, 2') est séparé dudit socle (3, 3'), et en ce qu'elle comporte, en outre, des moyens internes (41, 36; 41', 36') de raccordement desdites premières connexions individuelles auxdites deuxièmes et des moyens d'assemblage et de verrouillage (11-14) dudit bloc sur ledit socle.

2. Réglette selon la revendication 1, caractérisée en ce que lesdites premières connexions (20) appartiennent individuellement à des premiers contacts (40) montés dans ledit bloc (2) et lesdites deuxièmes connexions (30) individuellement à des deuxièmes contacts (35) montés dans ledit socle (3) et en ce que lesdits moyens internes de raccordement sont constitués par une première queue de connexion (41) sur chaque premier contact et une autre queue de connexion (36) sur chaque deuxième contact, dont les parties terminales (41A, 36A) viennent en contact élastique l'une contre l'autre dans ledit interface d'assemblage, quand le bloc est verrouillé sur le socle.

3. Réglette selon la revendication 2, caractérisée en ce qu'elle comporte une rangée de puits (21) le long de chaque rangée de premières connexions (20), débouchant à travers ledit bloc en regard de la queue de connexion des premiers contacts et de la queue de connexion des deuxièmes contacts.

4. Réglette selon l'une des revendications 2 et 3 caractérisée en ce que lesdites connexions sont des connexions autodénudantes, et en ce que lesdites premières et deuxièmes connexions (20, 30) sont du type à fourche simple disposée dans le sens longitudinal de la réglette.

5. Réglette selon la revendication 4, caractérisée en ce que chaque premier contact (40) est constitué par une lame dont les parties terminales opposées définissent la première connexion autodénudante (20) et la première queue de connexion (41) de ce premier contact, avec une pliure intermédiaire (40A) sur la lame entre elles.

6. Réglette selon la revendication 5, caractérisée en ce que ladite lame constituant chaque premier contact (40) est une lame double, à lames individuelles accolées sur ladite première connexion autodénudante (20) et séparées l'une de l'autre, à l'opposé, pour définir ladite première queue de connexion (41) et une deuxième queue de connexion (42) décalée de la première queue de connexion et dans le prolongement sensiblement de la première connexion autodénudante.

7. Réglette selon la revendication 6, caractérisée en ce que ledit bloc de raccordement (2) est à face arrière et face avant complémentaires l'une de l'autre, rendu adapté pour recevoir sur sa face avant un nouveau bloc qui lui est identique et qui est empilé sur lui, avec la deuxième queue de connexion de ce nouveau bloc en contact élastique contre la première connexion autodénudante (20) du bloc en place sur le socle.

8. Réglette selon l'une des revendications 4 à 7, caractérisée en ce que chacun desdits deuxièmes contacts (35) est constitué par une autre lame repliée en U, à branches d'inégale longueur, dont la plus courte des branches forme la deuxième connexion autodénudante et l'autre la queue de connexion de ce deuxième contact.

9. Réglette selon la revendication 8, caractérisée en ce qu'elle comporte deux rangées de premières connexions autodénudantes séparées l'une de l'autre par une gorge médiane (22) de passage des jarretières (4), ouverte sur la longueur de la face avant dudit bloc, avec les queues de connexion des premiers contacts dans deux logements situés de part et d'autre de la gorge médiane des jarretières et ouverts sur la face arrière du bloc, et comporte deux rangées de deuxièmes connexions séparées l'une de l'autre par une autre gorge médiane (32) de passage des conducteurs (50) de câble (5), avec les queues de connexion des deuxièmes contacts disposées plus extérieures que lesdites deuxièmes connexions autodénudantes dans le socle, sensiblement contre les parois dites supérieure et inférieure du socle.

10. Réglette selon la revendication 9, caractérisée en ce que lesdites parois supérieure et inférieure du socle présentent des fenêtres (53) en regard des queues de connexions desdits deuxièmes contacts (35), pour un raccordement possible sur chacune d'elles d'un boîtier annexe rapporté contre ladite réglette.

11. Réglette selon l'une des revendications 2 à 10, caractérisée en ce qu'elle comporte en outre un premier contact de masse (60) à l'une des extrémités de chaque rangée de premières connexions (20), affecté au raccordement des fils de masse des jarretières raccordées auxdites premières connexions, un deuxième contact de masse (31) à l'une des extrémités de chaque rangée de deuxièmes connexions (30), affecté au raccordement des fils de masse de câbles multiples possibles reçus dans le socle et dont les conducteurs sont raccordés aux deuxièmes connexions, et au moins une barrette de masse (67) montée dans ledit socle et présentant d'une part des parties terminales (67A; 67B) ramenées dans ledit interface d'assemblage et mises en contact ou formant les dits premiers et deuxièmes contacts de masse et d'autre part des parties intermédiaires de contact élastique (67C, 67D) sur ledit rail porteur (6).

12. Réglette selon la revendication 11, caractérisée en ce que ledit deuxième contact de masse (31) est constitué par un contact autodénudant plat à fente non ouverte de raccordement (31A) débouchant dans un trou (31B) d'entrée des fils de masse de câble, susceptible de recevoir plusieurs fils de masse superposés.

13. Réglette selon l'une des revendications 11 et 12, caractérisée en ce que ledit premier contact de masse (60) est constitué par un contact à étrier (61), monté et actionné dans ledit bloc (2) par une vis (29) accessible sur la face avant du bloc, dans lequel est montée prisonnière l'une des extrémités d'une lame de liaison (65) avec ladite barrette de masse (67).

14. Réglette selon l'une des revendications 11 à 13, caractérisée en ce que lesdites parties intermédiaires de chaque barrette de masse (67) comportent au moins une première patte élastique sensiblement médiane (67C), saillante sur la barrette de masse et la face arrière dudit bloc, pour ledit rail porteur de type rectiligne, et au moins une deuxième patte élastique (67D) saillante sur la barrette de masse et la face arrière dudit bloc, sensiblement au niveau desdits moyens de fixation (7) et ramenée contre eux, pour ledit rail porteur alors profilé en U.

15. Réglette selon l'une des revendications 2 à 14, caractérisée en ce que lesdits moyens d'assemblage et de verrouillage (11-14) dudit bloc (2) sur ledit socle (3) comportent des moyens complémentaires de guidage et d'insertion de la face arrière du bloc sur la face avant du socle, à plots (11) sur les parois de l'un d'eux et encoches (13) sur les parois de l'autre, et des moyens de verrouillage définis par le fond (13A) des encoches présentant un jeu pour les plots, pour un débattement (d) en translation du bloc sur le socle selon la longueur de ladite réglette.

16. Réglette selon la revendication 15, caractérisée en ce que lesdits moyens de verrouillage comportent en outre un doigt (12) et une rampe (14) sur le socle et le bloc respectivement, autorisant ledit débattement (d) quand les doigts (11) sont au fond desdites encoches (13).

17. Réglette selon l'une des revendications 15 et 16, caractérisée en ce qu'elle comporte en outre des moyens d'actionnement en translation (72-75,77;80) à l'aide d'un outil (70), prévus sur ledit bloc et le socle pour l'actionnement du bloc selon ledit débattement (d) entre une position de verrouillage et une position de déverrouillage, pour lesquelles les premières queues de connexions des premiers contacts (40) et les queues de connexion des deuxièmes contacts (35) sont en pression les unes contre les autres, pour la position de verrouillage, et décalées les unes des autres pour la position de déverrouillage.

18. Réglette selon la revendication 17, caractérisée en ce que lesdits moyens d'actionnement sont constitués par une première patte (72) à lumière (74) recevant l'outil, à une extrémité du bloc sur l'une de ses faces latérales, une deuxième patte (73) à trou (75) définissant un point de pivotement pour l'outil, sur l'extrémité correspondante du socle, et, en outre, d'une part, une troisième patte souple (77A) sur le bloc entre lesdites première et deuxième pattes et une butée sur la face arrière du bloc en regard du socle, pour l'outil inséré dans ladite lumière et le trou et en appui sur ladite troisième patte souple et actionné en levier de déverrouillage du bloc, et d'autre part un épaulement d'appui (2B) sur un bord saillant et extérieur à ladite première patte de la face avant du bloc, pour l'outil actionné en levier de verrouillage.

19. Réglette selon la revendication 17, caractérisée en ce que lesdits moyens d'actionnement sont constitués par un cadre métallique (80), monté autour du bloc, avec un jeu (x) sur le bloc selon ledit débattement (d) du bloc sur le socle, présentant une rainure interne (85) de réception de chacun desdits plots (11) prévus sur le socle (3) et une rampe terminale (86) en bout de course des plots dans chaque rainure et correspondant audit jeu (x), pour le couplage des rainures (85) avec le fond (13A) desdites encoches (13).

20. Réglette selon l'une des revendications 2 à 14, caractérisée en ce que lesdits moyens d'assemblage et de verrouillage (90) dudit bloc sur le socle comportent une vis (90), à tige ancrée à travers ledit bloc dans un écrou (93) bloqué dans le socle et à tête en appui sur la face avant du bloc, et une bague d'appui (95) bloquée dans ledit bloc et contre un épaulement intermédiaire sur la tige de ladite vis (90).

21. Réglette selon la revendication 1, caractérisée en ce que ledit bloc (2') est lui-même en deux parties assemblées et séparables l'une de l'autre, dites bloc avant (2'A) et bloc arrière (2'B), en ce que lesdites premières connexions (20') sont des connexions autodénudantes du type à fourche double et appartiennent à des premiers contacts individuels (40') montés dans ledit bloc avant (2'A) et présentant une queue de connexion (41') opposée, et en ce que lesdites deuxièmes connexions (30') sont des connexions autodénudantes en forme de U, appartiennent à des deuxièmes contacts individuels (35') montés dans le bloc arrière (2'B) et présentant une autre queue de connexion (36') opposée, et sont saillantes sur la face arrière du bloc arrière (2'B), avec l'ouverture du U en regard du socle, lesdites queues de connexion (41',36') des premiers et deuxièmes contacts individuels (40', 35') constituant lesdits moyens internes de raccordement.

22. Réglette selon la revendication 21, caractérisée en ce que lesdites premières connexions (20') sont disposées transversalement àla réglette, les queues de connexion (41') desdits premiers contacts (40') étant transversales aux premières connexions et s'étendant sensiblement selon l'axe de puits individueles (21') dans le bloc avant (2'A).

23. Réglette selon l'une des revendications 21 et 22, caractérisée en ce que lesdites deuxièmes connexions (30') sont séparées les unes des autres sur chaque rangée par une patte (38') saillante sur la face arrière dudit bloc arrière (2'B), à deux languettes terminales élastiques (38'A) s'étendant en V de part et d'autre de la patte et aboutissant en regard des deux deuxièmes connexions autodénudantes (30') adjacentes à cette patte, selon leur axe sensiblement, pour un guidage d'entrée de conducteur à raccorder et une retenue du conducteur raccordé dans chacune d'elles.

24. Réglette selon la revendication 23, caractérisée en ce que lesdites languettes (38'A) présentent entre elles et desdites deuxièmes connexions une ouverture (38'B), pour leur élasticité.

25. Réglette selon l'une des revendications 1 à 24, caractérisée en ce qu'elle comporte deux rangées de premières connexions autodénudantes sur la face avant du bloc (2, 2'), et en ce qu'elle comporte en outre deux demi-couvercles (25, 26) de protection, montés articulés aux extrémités des petits côtés saillants (2A) de la face avant du bloc, qu'ils recouvrent.

26. Réglette selon la revendication 25, caractérisée en ce que chacun desdits demi-couvercles porte des moyens d'identification (27) des premières connexions, sur sa face interne quand il est considéré fermé, et/ou des moyens d'identification (28) de la réglette elle-même sur sa face opposée.

27. Réglette selon l'une des revendications 1 à 26, caractérisée en ce qu'elle est prééquipée d'une longueur de câble (5), à multiconducteurs (50) raccordés auxdites deuxièmes connexions (30, 30'), de liaison à un autocommutateur.

## Patentansprüche

1. Vorverdrahtete Anschlußleiste, die die Anschlußverteilung zwischen den Leitern eines Kabels (5) und den Drähten von Schaltbrücken bewirkt und einen Isolierkörper aufweist, der mit Befestigungsmitteln (7) auf einer seiner Seiten, Rückseite genannt, für die Montage der Leiste an einer Tragschiene (6) versehen ist, und der erste Anschlüsse (20, 20'), die Schaltbrückendrähten zugewiesen sind, und zweite Anschlüsse (30, 30') trägt, die den Kabelleitern zugewiesen sind, dadurch gekennzeichnet, daß der Körper (1, 1') aus mindestens zwei Teilen (2, 3; 2', 3') besteht, die voneinander trennbar sind, nämlich einem rückwärtigen Sockel (3; 3') und einem vorderen Anschlußblock (2; 2'), wobei die Rückseite des Blocks und die Vorderseite des Sockels beim Zusammenbau eine Übergangsfläche zwischen beiden definieren, daß der Körper die ersten Anschlüsse (20, 20') alleine in mindestens einer Reihe auf der Vorderseite des Blockes aufweist, während die zweiten Anschlüsse (30, 30') übereinstimmend in mindestens einer Reihe, jedoch in der Übergangsfläche angeordnet und zugänglich sind, wenn der Block (2, 2') vom Sockel (3, 3') getrennt ist, und daß die Leiste weiter innere Mittel (41, 36; 41', 36') zum Anschließen der ersten individuellen Anschlüsse an die zweiten Anschlüsse sowie Mittel (11-14) zum Zusammensetzen und Verriegeln des Blockes und des Sockels aufweist.

2. Leiste nach Anspruch 1, dadurch gekennzeichnet, daß die ersten Anschlüsse (20) individuell zu den ersten Kontakten (20), die im Block (2) montiert sind, und die zweiten Anschlüsse (30) individuell zu den zweiten Kontakten (35) gehören, die im Sockel (3) montiert sind, und daß die inneren Anschlußmittel aus einer ersten Fahne (41) zum Anschließen an jeden ersten Kontakt und aus einer weiteren Fahne (36) zum Anschließen an jeden zweiten Kontakt bestehen, wobei die Endabschnitte (41A, 36A) der Fahnen in der Übergangsfläche in elastischen Kontakt gegeneinander gelangen, wenn der Block am Sockel verriegelt wird.

3. Leiste nach Anspruch 2, dadurch gekennzeichnet, daß sie eine Reihe von Schächten (21) entlang jeder Reihe der ersten Anschlüsse (20) aufweist, die durch den Block hindurch gegenüber der Anschlußfahne der ersten Kontakte sowie der Anschlußfahne der zweiten Kontakte münden.

4. Leiste nach einem der Ansprüche 2 und 3, dadurch gekennzeichnet, daß die Anschlüsse selbst abisolierende Anschlüsse sind und daß die ersten und zweiten Anschlüsse (20, 30) einfache Gabeln sind, die in Längsrichtung der Leiste angeordnet sind.

5. Leiste nach Anspruch 4, dadurch gekennzeichnet, daß jeder erste Kontakt (40) aus einer Zunge besteht, deren einander entgegengesetzte Endabschnitte den ersten selbst abisolierenden Anschluß (20) und die erste Anschlußfahne (41) dieses ersten Kontakts definieren, wobei ein Zwischenknick (40A) in der Zunge zwischen den Enden vorgesehen ist.

6. Leiste nach Anspruch 5, dadurch gekennzeichnet, daß die jeden ersten Kontakt (40) bildende Zunge eine Doppelzunge mit individuellen Zungen bildet, die am ersten selbst abisolierenden Anschluß (20) aneinanderliegen und am entgegengesetzten Ende voneinander getrennt sind, um die erste Anschlußfahne (41) sowie eine zweite Anschlußfahne (42) zu definieren, die gegen die erste Anschlußfahne versetzt ist und i.w. in der Verlängerung des ersten selbst abisolierenden Anschlusses liegt.

7. Leiste nach dem Anspruch 6, dadurch gekennzeichnet, daß Rückseite und Vorderseite des Anschlußblocks (2) einander komplementär sind, so daß der Block auf seiner Vorderseite einen neuen Block aufnehmen kann, der zu ihm identisch ist und der auf ihn aufgesetzt wird, wobei die zweite Anschlußfahne des neuen Blockes elastisch gegen den ersten selbst abisolierenden Anschluß (20) des auf dem Sockel positionierten Blockes drückt.

8. Leiste nach einem der Ansprüche 4 bis 7, dadurch gekennzeichnet, daß jeder der zweiten Kontakte (35) aus einer eigenen, U-förmig gefalteten Zunge mit Schenkeln ungleicher Länge besteht, deren kürzerer Schenkel den zweiten selbst abisolierenden Anschluß bildet, während der andere Schenkel die Anschlußfahne dieses zweiten Kontakts bildet.

9. Leiste nach Anspruch 8, dadurch gekennzeichnet, daß sie zwei Reihen erster selbst abisolierender Anschlüsse aufweist, die voneinander durch zwischen ihnen liegende Vertiefung (22) getrennt werden, die über die Länge der Vorderseite des Blockes für den Durchtritt der Schaltbrücken (4) offen ist, wobei die Anschlußfahnen der ersten Kontakte in zwei nach hinten offenen Kammern zu beiden Seiten der Vertiefung für die Schaltbrücken untergebracht sind, und daß die Leiste zwei Reihen zweiter Anschlüsse aufweist, die voneinander durch eine weitere zwischen ihnen liegende Vertiefung (32) für den Durchtritt der Leiter (50) des Kabels (5) getrennt werden, wobei die Anschlußfahnen der zweiten Kontakte weiter als die zweiten selbst abisolierenden Anschlüsse im Sockel nach außen reichend im wesentlichen an der oberen und der unteren Wand des Sockels anliegen.

10. Leiste nach Anspruch 9, dadurch gekennzeichnet, daß die obere und untere Wand des Sockels Fenster (53) gegenüber den Anschlußfahnen der zweiten Kontakte (35) für einen möglichen Anschluß eines Ergänzungsbauteils an jedes von ihnen aufweist, das an die Leiste angebaut wird.

11. Leiste nach einem Ansprüche 2 bis 10, dadurch gekennzeichnet, daß sie weiter aufweist:
- einen ersten Massekontakt (60) an einem Ende jeder Reihe von ersten Anschlüssen (20), der die Massedrähte der Schaltbrücken an Masse legt, welche mit den ersten Anschlüssen verbunden sind;
- einen zweiten Massekontakt (31) an einem Ende jeder Reihe von zweiten Anschlüssen (30), der die Massedrähte der mehreren möglichen Kabel an Masse legt, welche im Sockel aufgenommen werden und deren Leiter mit den zweiten Anschlüssen verbunden werden;
- und mindestens einen Massestab (67), der im Sockel montiert ist und einerseits Endabschnitte (67A; 67B) aufweist, die in die Übergangsfläche geführt und mit Masse in Kontakt gebracht sind oder die ersten und zweiten Massekontakte bilden, und die andererseits elastische Kontakt-Zwischenabschnitte (67C, 67D) auf der Tragschiene (6) bilden.

12. Leiste nach Anspruch 11, dadurch gekennzeichnet, daß der zweite Massekontakt (31) aus einem flachen, selbst abisolierenden Kontakt mit nicht offenem Anschlußschlitz (31A) besteht, der in ein Eingangsloch (31B) für die Massedrähte des Kabels mündet und dazu dient, mehrere übereinanderliegende Massedrähte aufzunehmen.

13. Leiste nach einem der Ansprüche 11 und 12, dadurch gekennzeichnet, daß der erste Massekontakt (60) aus einem Bügelkontakt (61) besteht, der im Block (2) montiert und von einer Schraube (29) betätigt wird, die von der Vorderseite des Blockes zugänglich ist, und in dem eines der Enden einer Zunge (65) zum Verbinden mit dem Massestab (67) eingeschlossen montiert ist.

14. Leiste nach einem der Ansprüche 11 bis 13, dadurch gekennzeichnet, daß die Zwischenabschnitte jedes Massestabs (67) mindestens eine erste elastische, im wesentlichen mittig gelegene Lasche (67 C), die über den Massestab und die Rückseite des Blocks für die gerade Tragschiene vorsteht, und mindestens eine zweite elastische Lasche (67D) aufweisen, die über den Massestab und die Rückseite des Blocks vorsteht, und zwar im wesentlichen in Höhe der Befestigungsmittel (7) und gegen diese anliegend, falls die Tragschiene ein U-förmiges Profil besitzt.

15. Leiste nach einem der Ansprüche 2 bis 14, dadurch gekennzeichnet, daß die Zusammenbau- und Verriegelungsmittel (11-14) des Blocks (2) auf dem Sockel (3) komplementäre Mittel zum Führen und Einfügen der Rückseite des Blocks in die Vorderseite des Sockels, mit Stiften (11) auf den Wänden einer der Seiten, und mit Einschnitten (13) in den Wänden der anderen Seite, und Verriegelungsmittel aufweisen, die durch den Boden (13A) der Einschnitte definiert sind und Platz für die Stifte zur Querverschiebung (d) des Blockes auf dem Sockel entlang der Länge der Leiste bieten.

16. Leiste nach Anspruch 15, dadurch gekennzeichnet, daß die Verriegelungsmittel weiter einen Finger (12) und eine Rampe (14) auf dem Sockel bzw. dem Block aufweisen, der die Verschiebung (d) ermöglicht, wenn sich die Finger (11) am Boden der Einschnitte (13) befinden.

17. Leiste nach einem der Ansprüche 15 und 16, dadurch gekennzeichnet, daß weiter Betätigungsmittel (72-75, 77; 80) auf dem Block und dem Sockel zur Durchführung einer Translationsbewegung mit Hilfe eines Werkzeugs (70) für die Bewegung des Blockes entlang der Verschiebungsstrecke (d) zwischen einer Verriegelungsposition und einer Entriegelungsposition vorgesehen sind, wobei die ersten Anschlußfahnen der ersten Kontakte (40) und die Anschlußfahnen der zweiten Kontakte (35) im Falle der Verriegelungsposition aufeinander drücken, und im Falle der Entriegelungsposition voneinander einen Abstand besitzen.

18. Leiste nach Anspruch 17, dadurch gekennzeichnet, daß die Betätigungsmittel bestehen:
- aus einer ersten Lasche (72) mit einer Öffnung (74) zur Aufnahme des Werkzeugs an einem Ende des Blockes an einer seiner Seitenflächen,
- aus einer zweiten Lasche (73) mit Loch (75), die einen Schwenkpunkt für das Werkzeug auf dem entsprechenden Ende des Sockels definiert,
- und weiter einerseits aus einer dritten nachgiebigen Lasche (77 A) auf dem Block zwischen der ersten und der zweiten Lasche sowie aus einem Anschlag auf der Rückseite des Blocks gegenüber dem Sockel für das in die Öffnung und das Loch eingefügte und auf der dritten, nachgiebigen Lasche abgestützte und als Entriegelungshebel des Blockes wirkende Werkzeug, und andererseits aus einer Stützschulter (2B) auf einem vorstehenden Rand und außerhalb der ersten Lasche der Vorderseite des Blocks für das Werkzeug, das dann die Verriegelung bewirkt.

19. Leiste nach Anspruch 17, dadurch gekennzeichnet, daß die Betätigungsmittel aus einem Metallrahmen (80) bestehen, der um den Block mit einem Spiel (x) auf dem Block in Richtung der Verschiebung (d) des Blockes zum Sockel montiert ist, wobei der Rahmen eine innere Nut (85) zum Aufnehmen jedes der Stifte (11), die auf dem Sockel (3) vorgesehen sind, und eine Endrampe (86) am Ende des Hubes der Stifte in jeder Nut und entsprechend dem Spiel (x) für die Kopplung der Nuten (85) mit dem Boden (13A) der Einschnitte (13) aufweist.

20. Leiste gemäß einem der Ansprüche 2 bis 14, dadurch gekennzeichnet, daß die Zusammenbau- und Verriegelungsmittel (90) des Blocks auf dem Sockel eine Schraube (90) mit einem durch den Block hindurch verlaufenden und in einer Mutter (93) verankerten Schaft enthalten, die im Sockel blockiert ist, wobei der Kopf der Schraube auf der Vorderseite des Blockes anliegt, und daß die Mittel einen Abstützring (95) enthalten, der in dem Block sowie gegen eine Zwischenschulter auf dem Schaft der Schraube (90) blockiert ist.

21. Leiste nach Anspruch 1, dadurch gekennzeichnet, daß der Block (2') seinerseits aus zwei zusammengesetzten und voneinander trennbaren Teilen besteht, nämlich einem vorderen Block (2'A) und einem hinteren Block (2'B), und daß die ersten Anschlüssen (20') selbst abisolierende Anschlüsse vom Doppelgabeltyp sind und den ersten individuellen Kontakten (40') angehören, die in dem vorderen Block (2'A) montiert sind und eine gegenüberliegende Anschlußfahne (41') aufweisen, und daß die zweiten Anschlüsse (30') selbst abisolierende Anschlüsse in Form eines U bilden und individuellen zweiten Kontakten (35') angehören, die im hinteren Block (2'B) montiert sind und eine andere gegenüberliegende Anschlußfahne (36') bilden sowie über die Rückseite des hinteren Blockes (2'B) vorstehen, wobei die Öffnung des U-Profils gegenüber dem Sockel liegt und die Anschlußfahnen (41', 36') der ersten und zweiten individuellen Kontakte (40', 35') die inneren Anschlußmittel bilden.

22. Leiste nach Anspruch 21, dadurch gekennzeichnet, daß die ersten Anschlüsse (20') quer zur Leiste angeordnet sind, und daß die Anschlußfahnen (41') der ersten Kontakte (40') quer zu den ersten Anschlüssen liegen und sich im wesentlichen entlang der Achse der individuellen Schächte (21') im vorderen Block (2'A) erstrecken.

23. Leiste nach einem der Ansprüche 21 und 22, dadurch gekennzeichnet, daß die zweiten Anschlüsse (30') voneinander in jeder Reihe durch eine Lasche (38'), die über die hintere Fläche des hinteren Blocks (2'B) vorsteht, mit zwei elastischen Endzungen (38'A) getrennt sind, welche sich V-förmig zu beiden Seiten der Lasche erstrecken und gegenüber im wesentlichen den Achsen von zwei selbst abisolierenden zweiten Anschlüssen (30') neben dieser Lasche enden, um eine Führung des anzuschließenden Leiters beim Einführen und eine Fixierung des angeschlossenen Leiters in jedem dieser Anschlüsse zu gewährleisten.

24. Leiste nach Anspruch 23, dadurch gekennzeichnet, daß die Zungen (38'A) zwischen sich und den zweiten Anschlüssen eine Öffnung (28'B) zur Erhöhung ihrer Elastizität aufweisen.

25. Leiste nach einem der Ansprüche 1 bis 24, dadurch gekennzeichnet, daß sie zwei Reihen von selbst abisolierenden ersten Anschlüssen auf der Vorderseite des Blockes (2, 2') und weiter zwei halbe Schutzdeckel (25, 36) aufweist, die gelenkig an den Enden der kleinen vorstehenden Seiten (2A) der Vorderfläche des Blockes befestigt sind, die sie bedekken.

26. Leiste nach Anspruch 25, dadurch gekennzeichnet, daß jeder der Halbdeckel Mittel (27) zum Identifizieren der ersten Anschlüsse auf seiner Innenseite, wenn er als geschlossen betrachtet wird, und/oder Mittel (28) zum Identifizieren der Leiste selber auf ihrer entgegengesetzten Seite trägt.

27. Leiste nach einem der Ansprüche 1 bis 26, dadurch gekennzeichnet, daß sie ab Werk mit einer Kabellänge (5) mit einer Vielzahl von Leitern (50) ausgerüstet ist, die an die zweiten Anschlüsse (30, 30') zur Verbindung mit einer Vermittlungszentrale angeschlossen sind.

## Claims

1. Pre-wirable connecting terminal strip for cross-connecting cable conductors (5) and jumper link wires, comprising an insulative body having fixing means (7) on a rear face for mounting said terminal strip on a support rail (6) and carrying first connections (20, 20') for the jumper link wires and second connections (30, 30') for the cable conductors, characterised in that said body (1, 1') is in at least two parts (2, 3; 2', 3') adapted to be separated from each other, called bases (3; 3') for one of them at the rear and called connection blocks (2; 2') for the other at the front, and assembled with the rear face of said block and the front face of the base defining an assembly interface between them, and has said first connections (20, 20') disposed on their own in at least one row on the front face of the block and said second connections (30, 30') disposed in corresponding relationship thereto in at least one row but in said assembly interface and accessible when the block (2, 2') is separated from said base (3, 3'), and in that it further comprises internal means (41, 36; 41', 36') for connecting said first individual connections to said second individual connections and means (11-14) for assembling and locking said block to said base.

2. Terminal strip according to claim 1 characterised in that said first connections (20) belong individually to first contacts (40) mounted in said block (2) and said second connections (30) belong individually to second contacts (35) mounted in said base (3) and in that said internal connecting means comprise a first connecting tail (41) on each first contact and another connecting tail (36) on each second contact, end parts (41A, 36A) of which are in elastic contact with each other in said assembly interface when the block is locked to the base.

3. Terminal strip according to claim 2 characterised in that it includes a row of wells (21) along each row of first connections (20) opening through said block facing the connecting tail of the first contacts and the connecting tail of the second contacts.

4. Terminal strip according to claim 2 or claim 3 characterised in that said connections are insulation displacement connections and in that said first and second connections (20, 30) are of the single fork type disposed in the longitudinal direction of the terminal strip.

5. Terminal strip according to claim 4 characterised in that each first contact (40) is constituted by a blade member whose opposite end parts define the first insulation displacement connection (20) and the first connecting tail (41) of this first contact, with an intermediate bend (40A) on the blade member between them.

6. Terminal strip according to claim 5 characterised in that said blade member constituting each first contact (40) is a double blade member with individual blade members in contact with each other at one end to form said first insulation displacement connection (20) and separated from each other at the opposite end to form said first connecting tail (41) and a second connecting tail (42) offset from the first connecting tail and substantially aligned with the first insulation displacement connection.

7. Terminal strip according to claim 6 characterised in that said connecting block (2) has complementary rear and front faces and is adapted to receive on its front face another block identical to it and which is stacked on it with the second connecting tail of this other block in elastic contact against the first insulation displacement connection (20) of the block on the base.

8. Terminal strip according to any one of claims 4 to 7 characterised in that each of said second contacts (35) is constituted by another blade member bent to a U-shape with branches of unequal length, the shorter branch of which forms the second insulation displacement connection and the longer branch of which forms the connecting tail of this second contact.

9. Terminal strip according to claim 8 characterised in that it includes two rows of first insulation displacement connections separated from each other by a median groove (22) for passing the jumper links (4) through, open along the length of the front face of the block, with the connecting tails of the first contacts in two housings located to either side of the median groove for the jumper links and opening onto the rear face of the block, and includes two rows of second connections separated from each other by another median groove (32) for passing the conductors (50) of the cable (5) through, with the connecting tails of the second contacts disposed further out than said second insulation displacement connections in the base, substantially against the top and bottom walls of the base.

10. Terminal strip according to claim 9 characterised in that said top and bottom walls of the base have windows (53) facing the connecting tails of said second contacts (35) to allow connection to each of them of an auxiliary module applied against said terminal strip.

11. Terminal strip according to any one of claims 2 to 10 characterised in that it further includes a first earth contact (60) at one end of each row of first connections (20) for connecting earth wires of the jumper links connected to said first connections, a second earth contact (31) at one end of each row of second connections (30) for connecting earth wires of multiple cables received in the base and whose conductors are connected to the second connections, and at least one earthing strip (67) mounted in said base and having end parts (67A; 67B) brought into said assembly interface and placed in contact or forming said first and second earth contacts and intermediate parts (67C, 67D) for elastic contact with said support rail (6).

12. Terminal strip according to claim 11 characterised in that said second earth terminal (31) is constituted by a flat insulation displacement contact with a closed connecting slot (31A) leading into a hole (31B) for inserting cable earth wires, adapted to receive a plurality of superposed earth wires.

13. Terminal strip according to claim 11 or claim 12 characterised in that said first earth contact (60) is constituted by a stirrup contact member (61) mounted in said block (2) and actuated by a screw (29) accessible from the front face of the block, one end of a strip member (65) connected to said earth strip (67) being trapped in said stirrup contact member.

14. Terminal strip according to any one of claims 11 to 13 characterised in that said intermediate parts of each earth strip (67) include at least a first substantially median elastic lug (67C) projecting from the earth strip and from the rear face of said block for a support rail of the straight type and at least a second elastic lug (67D) projecting from the earth strip and from the rear face of said block, substantially level with said fixing means (7) and placed against them, for a support rail of the U-shape type.

15. Terminal strip according to any one of claims 2 to 14 characterised in that said means (11-14) for assembling and locking said block (2) to said base (3) include complementary guide and insertion means for the rear face of the block on the front face of the base, with studs (11) on the walls of one of them and notches (13) on the walls of the other, and locking means defined by the back (13A) of the notches with clearance for the studs to allow relative movement (d) in translation of the block on the base in the lengthwise direction of the terminal strip.

16. Terminal strip according to claim 15 characterised in that said locking means further include a finger (12) and a ramp (14) on the base and the block, respectively, enabling said movement (d) when the fingers (11) are at the back of said notches (13).

17. Terminal strip according to claim 15 or claim 16 characterised in that it further includes means (72-75, 77; 80) for actuation of movement in translation by means of a tool (70), said actuation means being provided on said block and on the base to move the block by said distance (d) between a locked position and an unlocked position, the first connecting tails of the first contacts (40) and the connecting tails of the second contacts (35) being pressed against each other in the locked position and away from each other in the unlocked position.

18. Terminal strip according to claim 17 characterised in that said actuation means comprise a first lug (72) with a hole (74) receiving the tool at one end of the block on one of its lateral faces, a second lug (73) with a hole (75) defining a pivot point for the tool on the corresponding end of the base, a flexible third lug (77A) on the block between said first and second lugs, an abutment on the rear face of the block facing the base for the tool when inserted in said holes and bearing on said flexible third lug and actuated leverfashion to unlock the block, and a bearing shoulder (2B) on a projecting exterior edge of said first lug on the front face of the block for the tool operated as a locking lever.

19. Terminal strip according to claim 17 characterised in that said actuation means comprise a metal frame (80) mounted around the block with a clearance (x) from the block in the direction of said displacement by said distance (d) of the block on the base, having an internal groove (85) for receiving each of said studs (11) provided on the base (3) and a ramp (86) at the end of the travel of the studs in each groove and corresponding to said clearance (x) for coupling the grooves (85) with the back (13A) of said notches (13).

20. Terminal strip according to any one of claims 2 to 14 characterised in that said means (90) for assembling and locking said block to said base include a screw (90) with its shank passing through said block and anchored in a captive nut (93) and with its head bearing against the front face of the block and a bearing ring (95) locked in said block and against an intermediate shoulder on the shank of said screw (90).

21. Terminal strip according to claim 1 characterised in that said block (2') is in two parts which can be assembled together and separated from each other, namely a front block (2'A) and a rear block (2'B), in that said first connections (20') are insulation displacement connections of the double fork type belonging to first individual contacts (40') mounted in said front block (2'A) and having a connecting tail (41') at the opposite end, and in that said second connections (30') are U-shape insulation displacement connections belonging to individual second contacts (35') mounted in the rear block (2'B) and having another connecting tail (36') at the opposite end and project from the rear face of the block (2'B) with the open side of the U-shape facing the base, said connecting tails (41', 36') of the first and second individual contacts (40', 35') constituting said internal connecting means.

22. Terminal strip according to claim 21 characterised in that said first connections (20') are disposed transversely to the terminal strip, the connecting tails (41') of said first contacts (40') being transverse to the first connections and extending substantially along the axis of individual wells (21') in the front block (2'A).

23. Terminal strip according to claim 21 or claim 22 characterised in that said second connections (30') are separated from each other in each row by a lug (38') projecting from the rear face of said rear block (2'B) and having two elastic tongues (38'A) extending in a V-shape from one end of and to either side of the lug and ending facing two second insulation displacement connections (30') adjacent said lug, substantially along their axis, for guiding entry of the conductor to be connected and retaining the connected conductor in each of them.

24. Terminal strip according to claim 23 characterised in that to make them sufficiently elastic there is a gap (38'B) between said tongues (38'A) and said second connections.

25. Terminal strip according to any one of claims 1 to 24 characterised in that it includes two rows of first insulation displacement connections on the front face of the block (2, 2') and in that it further includes two protective half-covers (25, 26) hinged to the ends of projecting shorter sides (2A) of the front face of the block, which they cover.

26. Terminal strip according to claim 25 characterised in that each of said half-covers carries means (27) for identifying the first connections on its inside face (the face on its inside when closed) and/or means (28) for identifying the terminal strip itself on its opposite face.

27. Terminal strip according to any one of claims 1 to 26 characterised in that it is pre-equipped with a length of cable (5) having multiconductors (50) connected to said second connections (30, 30') and for subsequent connection to an exchange.
